(19) Europäisches Patentamt
European Patent Office
Office européen des brevets

(11) **EP 4 707 012 A1**

(12) **EUROPEAN PATENT APPLICATION**

(43) Date of publication:
**11.03.2026 Bulletin 2026/11**

(21) Application number: **25198332.6**

(22) Date of filing: **27.08.2025**

(51) International Patent Classification (IPC):
*B60K 6/00* (2006.01)    *B60K 6/46* (2007.10)
*B60W 10/06* (2006.01)    *B60W 10/08* (2006.01)
*B60W 10/26* (2006.01)    *B60W 20/11* (2016.01)
*B60W 20/13* (2016.01)    *B60W 20/15* (2016.01)
*B60W 20/40* (2016.01)    *B60W 30/18* (2012.01)
*B60W 30/192* (2012.01)

(52) Cooperative Patent Classification (CPC):
**B60K 6/46; B60W 10/06; B60W 10/08;
B60W 10/26; B60W 20/11; B60W 20/13;
B60W 20/15; B60W 20/40; B60W 30/18036;
B60W 30/192;** B60K 2001/001; B60K 2006/268;
B60W 2050/0042; B60W 2510/305; B60W 2520/06;
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.09.2024 JP 2024154823**

(71) Applicant: **Suzuki Motor Corporation
Shizuoka 432-8611 (JP)**

(72) Inventor: **WATANABE, Teruaki
HAMAMATSU-SHI, 432-8611 (JP)**

(74) Representative: **Plasseraud IP
104 Rue de Richelieu
CS92104
75080 Paris Cedex 02 (FR)**

(54) **CONTROL DEVICE OF HYBRID VEHICLE**

(57)    [Object]
It is to provide a control device of a vehicle capable of avoiding an engine from being unnecessarily started.
[Solution]
A hybrid vehicle 1 includes: an engine 2; a MG1 to generate an electric power using a driving force of the engine; a battery 3 to be charged with the generated electric power by the MG1; a MG2 to drive a driving wheel 9 with the generated electric power by the MG1 and the charged electric power in the battery; and a control unit 40 to change an engine start determination condition of determining whether to start the engine 2, upon a switching between a forward travel and a backward travel.

FIG. 1

(52) Cooperative Patent Classification (CPC): (Cont.)
B60W 2520/10; B60W 2540/16; F02N 2200/0802;
F02N 2300/2002

**Description**

[Technical Field]

The present invention relates to a control device of a hybrid vehicle.

[Background Art]

As a prior art, there is known Patent Literature 1 which discloses a hybrid vehicle with an engine, a generation motor to generate an electric power using a driving force of the engine, a battery to be charged with the generated electric power by the generation motor, and a traction motor to be driven with the generated electric power by the generation motor or the outputted electric power from the battery, in which the generation motor is connected to an output shaft of the engine, and the traction motor is connected to driving shafts which connect to driving wheels.

[Citation List]

[Patent Literature]

[Patent Literature 1] JP 2011-11714 A

[Summary of Invention]

[Technical Problem]

However, in such a prior hybrid vehicle, in consideration of an outputtable electric power of a high-voltage battery during an EV travel using the traction motor for a vehicle travel, an electric power to be consumed by an electric load(s) mounted on the vehicle, and an electric power for starting the engine, the engine is to be started when a power consumption at the traction motor exceeds a threshold value.

Generally, a vehicle in backward travel is more likely to be parked than that in forward travel. For this reason, even if the engine is started while the hybrid vehicle travels backward, the engine is expected to be stopped in a short time due to the parking of the hybrid vehicle.

Accordingly, in the prior hybrid vehicle, if an engine start condition at a backward travel is the same as that at a forward travel and thus, the engine may be unnecessarily started at the backward travel, thereby bringing a room for improvement.

The present invention has been made in consideration of the above-mentioned circumstances, and an object thereof is to provide a control device of a hybrid vehicle capable of avoiding an engine from being unnecessarily started.

[Solution to Problem]

According to an aspect of the present invention, there is provided a control device of a hybrid vehicle, the hybrid vehicle including: an engine; a generation motor to rotate together with the engine to thereby generate an electric power; a battery to store the generated electric power by the generation motor; and a traction motor to drive a driving wheel with the generated electric power by the generation motor and the stored electric power in the battery, the control device including a control unit to start the engine following an engine start determination condition depending on a travel direction of the hybrid vehicle.

[Advantageous Effect of Invention]

According to the present invention, it is possible to avoid an engine from being unnecessarily started.

[Brief Description of Drawings]

FIG. 1 is a diagram of a hybrid vehicle mounted with a control device according to an embodiment of the present invention.
FIG. 2 is a flowchart which shows an engine start control process to be performed by the control device according to the embodiment.

[Description of Embodiment]

A control device according to an embodiment of the present invention is mounted on a hybrid vehicle, the hybrid vehicle including: an engine; a generation motor to rotate together with the engine to thereby generate an electric power; a battery to store the generated electric power by the generation motor; and a traction motor to drive a driving wheel with the generated electric power by the generation motor and the stored electric power in the battery, the control device including a control unit to start the engine following an engine start determination condition depending on a travel direction of the hybrid vehicle.

Accordingly, it is possible to avoid an engine from being unnecessarily started.

[Embodiment(s)]

Hereinafter, referring to Figs., a hybrid vehicle mounted with a control device according to an embodiment of the present invention will be described.

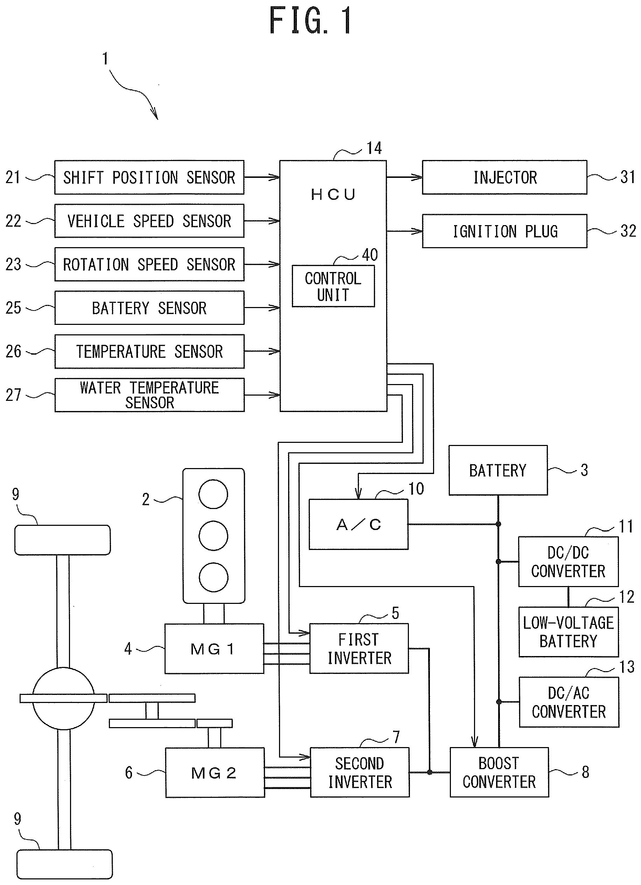

As shown in FIG. 1, a hybrid vehicle 1 includes an internal combustion engine 2 (hereinafter referred to simply as "engine"), a battery 3, a first motor 4 (hereinafter also referred to as "MG1"), a first inverter 5, a second motor 6 (hereinafter also referred to as "MG2"), a second inverter 7, a boost converter 8, driving wheels 9, an air conditioner 10 (hereinafter also referred to as "A/C"), a DC/DC converter 11, a low-voltage battery 12, a DC/AC converter 13, and a hybrid controller 14 (hereinafter referred to simply as "HCU").

The engine 2 is formed with a plurality of cylinders. The engine 2 is configured to perform, for each of the cylinders, a series of four steps of an intake step, a compression step, an expansion step, and an exhaust step, to thereby generate a mechanical power.

The engine 2 is to be used for generating an electric power, which is configured to rotate the MG1 with the mechanical power to thereby generate an electric power.

The battery 3 is of a secondary battery (i.e., rechargeable battery), such as a lithium-ion battery.

The battery 3 is configured to store an electric power generated by the MG1/MG2, to thereby supply the stored electric power to the MG1 and the MG2 to drive them. The battery 3 is to output a higher voltage (e.g., 100V) than the low-voltage battery 12.

The MG1 is connected to a crankshaft of the engine 2 so as to rotate together therewith. The MG1 is electrically connected to the battery 3 through the first inverter 5 and the boost converter 8. The MG1 has a motor function of rotating with an electric power supplied from the battery 3 to thereby start the engine 2, and a generator function of converting the mechanical power generated by the engine 2 into an electric power.

The MG1 constitutes a generation motor of the present invention.

The MG2 is connected to the driving wheels 9 through a power transmission member such as a gear mechanism, to thereby rotate together with the driving wheels 9. The MG2 is electrically connected to the battery 3 through the second inverter 7 and the boost converter 8.

The MG2 has a motor function of rotating with an electric power supplied from the battery 3 and/or the MG1 to thereby rotate the driving wheels 9, and a generator function of converting a rotation force of the driving wheels 9 into an electric power. That is, the MG2 is configured to drive the hybrid vehicle 1/generate a braking force due to a regeneration.

The MG2 constitutes a traction motor of the present invention.

The boost converter 8 is disposed between the battery 3 and the first and second inverters 5, 7, which is configured to boost a voltage of an electric power to be supplied from the battery 3 to the first and second inverters 5, 7 and to step down a voltage of an electric power to be supplied from the first and second inverters 5, 7 to the battery 3.

The A/C 10 is configured to be activated with an electric power supplied from the battery 3, to thereby adjust temperature in a vehicle compartment.

The DC/DC converter 11 is configured to step down the stored electric power in the battery 3 to thereby supply the low-voltage battery 12 with it.

The low-voltage battery 12 (e.g., output voltage of 12V) is configured to store an electric power to be supplied to electric loads such as a headlight, a lump and a meter on an instrument panel, and a car navigation system.

The DC/AC converter 13 is configured to convert the DC power stored in the battery 3 into an AC power, to thereby supply the converted AC power to an AC electric device which is connected to an electric outlet provided within the hybrid vehicle 1.

The HCU 14 is constituted by a computer unit including a Central Processing Unit (CPU), a Random Access Memory (RAM), a Read Only Memory (ROM), a flash memory to store a backup data and the like, and input and output ports.

The ROM of the computer unit stores a program for causing the computer unit to function as the HCU 14, in addition to various constants and maps. That is, the CPU executes the program stored in the ROM using the RAM as an operation area, causing the computer unit to function as the HCU 14.

The input port of the HCU 14 is connected with various sensors including a shift position sensor 21 to detect a shift position (e.g., P range, R range, N range, or D range), a vehicle speed sensor 22 to detect a speed of the hybrid vehicle 1 (hereinafter also referred to simply as "vehicle speed"), a rotation speed sensor 23 to detect a rotation speed of the MG2 (hereinafter also referred to simply as "MG2 rotation speed"), a battery sensor 25 to detect states of the battery 3, such as a discharging/charging current of the battery 3 and a voltage between terminals in the battery 3, a temperature sensor 26 to detect temperature of the battery 3, and a water temperature sensor 27 to detect temperature of a cooling water in the engine 2.

The output port of the HCU 14 is connected with various control-targets including the first inverter 5, the second inverter 7, the boost converter 8, the A/C 10, injectors 31 to supply a fuel into the engine 2, and ignition plugs 32 to ignite the supplied fuel in respective combustion chambers of the engine 2.

Note that the engine 2 may be of a diesel engine with no ignition plugs. In this case, the ignition plugs 32 becomes unnecessary to be installed on the hybrid vehicle 1.

The HCU 14 is configured to control the various control-targets connected to the output port, based on information acquired from the various sensors connected to the input port. In the embodiment, the HCU 14 functions as a control unit 40 to start the engine 2 on an engine start determination condition depending on a travel direction (namely, forward/backward) of the hybrid vehicle 1.

The HCU 14 is configured to determine that the engine start determination condition is established to thereby drive the MG1 to start the engine 2, if a continuous period of time, for which a power requested to be outputted from the MG2 (hereinafter referred to simply as "request power") is maintained to satisfy a predetermined condition, exceeds a predetermined period of time TH (i.e., hold time for engine start). That is, the HCU 14 does not start the engine 2 immediately after the request power satisfies the predetermined condition, but starts the engine 2 if the request power still satisfies the predetermined condition even after the predetermined period of time TH elapses.

Such a request power is a power requested by the driver to be outputted from the MG2, which is to be calculated based on the vehicle speed and an accelerator operation amount, for example.

Specifically, the HCU 14 determines that the request power satisfies the predetermined condition, if the battery 3 is impossible to supply to the MG2 an electric power necessary for outputting the request power. That is, the HCU 14 determines that the request power satisfies the predetermined condition, if such an electric power is larger than a suppliable electric power of the battery 3 for the MG2.

In the embodiment, the HCU 14 constantly determines whether the request power satisfies the predetermined condition (namely, whether the electric power necessary for the MG2 to output the request power exceeds the suppliable electric power of the battery 3 for the MG2), as the following equation (1). That is, the HCU 14 determines that the request power satisfies the predetermined condition, if the equation (1) is established. Otherwise, the HCU 14 determines that the request power does not satisfy the predetermined condition.

Note that in the equation (1):

the request power is indicated as "Mr";
a power currently-outputted from the MG2 is indicated as "Mc";
a dischargeable electric power of the battery 3 is indicated as "Em";
an electric power necessary for starting the engine 2 is indicated as "Ee";
a margin load is indicated as "Mm"; and
an electric power currently-discharged from the battery 3 is indicated as "Ec".

$$Mr - Mc > (Em - Ee - Mm) - Ec \quad \ldots(1)$$

Specifically, the HCU 14 calculates a current output torque of the MG2 (hereinafter also referred to simply as "MG2 torque"), based on the vehicle speed and the accelerator operation amount. The HCU 14 calculates the power Mc currently-outputted from the MG2, from the detected MG2 rotation speed by the rotation speed sensor 23 and the calculated MG2 torque ("power Mc" = "MG2 rotation speed" $\times$ "MG2 torque").

Left side of the equation (1) means a difference between the request power Mr and the currently-outputted power Mc, namely the electric power necessary for causing the current power to reach the request power Mr. For example, at a travel start of the hybrid vehicle 1 (at MG2 rotation speed of zero), such a necessary electric power is equal to the request power Mr. But during a vehicle travel (at MG2 rotation speed of more than zero), such a necessary electric power is smaller as the currently-outputted power Mc is larger.

Right side of the equation (1) means the suppliable electric power of the battery 3 for the MG2.

Upon an establishment of the engine start determination condition due to an establishment of the equation (1) over more than the predetermined period of time TH, the engine 2 is to be driven to thereby cause the MG1 to generate an electric power so as to compensate for the shortage of the suppliable electric power of the battery 3 to such a necessary electric power. That is, the engine 2 is to be driven so that the MG1 can generate an electric power which corresponds to a difference between the left side and the right side of the equation (1) (= (Mr-Mc)-(Em-Ee-Mm-Ec)), to thereby supply the generated electric power to the MG2.

In the embodiment, the ROM of the HCU 14 stores a battery dischargeable electric power map where the dischargeable electric power Em of the battery 3 is associated with temperature of the battery 3.

Referring to the battery dischargeable electric power map, the HCU 14 calculates the dischargeable electric power Em from the temperature of the battery 3.

Also, the ROM of the HCU 14 stores an engine start-timing electric power map where the for-engine-start electric power Ee is associated with temperature of the cooling temperature in the engine 2.

Referring to the engine start-timing electric power map, the HCU 14 calculates the for-engine-start electric power Ee from the detected temperature of the cooling temperature by the water temperature sensor 27.

The margin load Mm is set in advance, to prevent an overdischarging of the battery 3. In the embodiment, the margin load Mm is a constant value. The margin load Mm includes an electric load(s) of the MG1 to be driven for starting the engine 2, for example.

The HCU 14 is configured to detect the currently-discharged electric power Ec from the battery 3, from the detected discharging/charging current of the battery 3 and the detected terminal voltage of the battery 3 by the battery sensor 25.

The ROM of the HCU 14 stores a plurality of hold time maps in each of which the predetermined period of time TH is associated with the vehicle speed, the request power Mr, and a SOC (State Of Charge) of the battery 3 (hereinafter also referred to simply as "battery SOC"). In the embodiment, as the plurality of hold time maps, the ROM of the HCU 14 includes a hold time map for forward travel (hereinafter also referred to as "forward-travel hold-time map") and another hold time map for backward travel (hereinafter also referred to as "backward-travel hold-time map").

In each of these hold time maps, the predetermined period of time TH:

is longer as the vehicle speed becomes lower;
is shorter as the request power Mr becomes larger; and
is shorter as the battery SOC becomes lower.

In the backward-travel hold-time map, the predetermined period of time TH depending on the vehicle speed, the request power Mr, and the battery SOC is set to be longer than in the forward-travel hold-time map. That is, even at the same vehicle speed, the same request power Mr, and the same battery SOC, the predetermined period of time TH in the backward-travel hold-time map is longer than that in the forward-travel hold-time map.

In other words, the predetermined period of time TH is to be calculated from a certain equation with parameters of the vehicle speed, the request power Mr, and the battery SOC, for example. But this equation is different between the backward-travel hold-time map and the forward-travel hold-time map.

The HCU 14 is configured to:

select the forward-travel hold-time map to thereby set the predetermined period of time TH referring thereto, while the shift position sensor 21 detects a shift position corresponding to a forward travel (namely, D range); but
select the backward-travel hold-time map to thereby set the predetermined period of time TH referring thereto, while the shift position sensor 21 detects a shift position corresponding to a backward travel (namely, R range).

As such, the HCU 14 is configured to select one of the hold time maps in accordance with a travel direction of the hybrid vehicle 1 (forward travel/backward travel), and determine whether to start the engine 2, using the selected hold time map. In other words, at the forward travel and the backward travel, the HCU 14 is to perform an engine start determination using the different hold-time map.

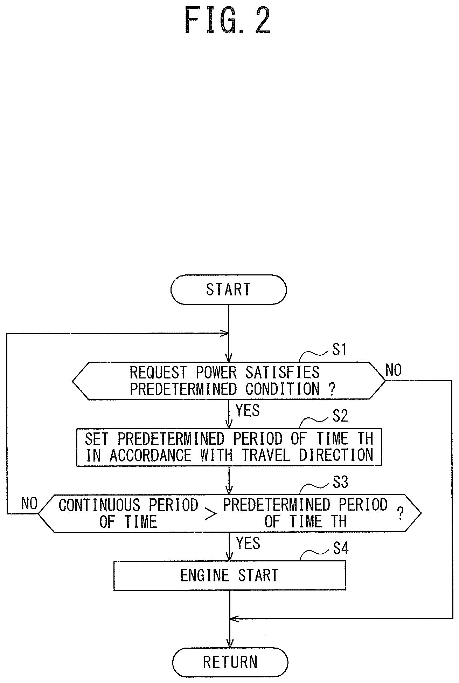

Next, referring to FIG. 2, an engine start control process to be performed by the above-mentioned HCU 14 will be explained. Note that the engine start control process is to be repeated while the engine 2 is stopped.

Firstly, at step S1, the HCU 14 determines whether the request power satisfies the predetermined condition. That is, at step S1, the HCU 14 determines whether the above-mentioned equation (1) is established.

At step S1, if determines that the request power satisfies the predetermined condition ("YES" at step S1), namely the equation (1) is established, the HCU 14 proceeds to step S2.

Otherwise ("NO" at step S1), the HCU 14 terminates this engine start control process to thereby repeat it.

At step S2, the HCU 14 sets the predetermined period of time TH in accordance with the current travel direction of the hybrid vehicle 1. Specifically, at step S2, the HCU 14 selects one of the hold time maps based on the shift position currently-detected by the shift position sensor 21, and sets the predetermined period of time TH using the selected map.

Note that the HCU 14 starts to count a lapse time (count a time for continuous period of time for which the predetermined condition is in establishment), upon a transition from the state where the predetermined condition is non-established to the state where the predetermined condition is established. While the predetermined condition is in establishment, the lapse time is counted up for each unit time.

After step S2, the HCU 14 proceeds to step S3.

At step S3, the HCU 14 determines whether the continuous period of time (count time), for which the request power continues to be determined to satisfy the predetermined condition, exceeds the set predetermined period of time TH at step S2. In other words, the HCU 14 determines whether more than the predetermined period of time TH elapses while the request power satisfies the predetermined condition.

If determines at step S3 that the continuous period of time exceeds the predetermined period of time TH ("YES" at step S3), the HCU 14 determines that the engine start determination condition is established, thereby proceeding to step S4.

Otherwise ("NO" at step S3), the HCU 14 proceeds to step S1 again.

At the repeated step S1, for example, if the request power no longer satisfies the predetermined condition due to a release of the accelerator pedal, "NO" is to be determined and the count for the lapse time is to be reset.

At step S4, the HCU 14 starts the engine 2. Specifically, at step S4, while activating the first inverter 5 so as to drive the MG1 to thereby rotate the crankshaft of the engine 2, the HCU 14 starts fuel supply by the injectors 31 and ignition by the ignition plugs 32, thereby starting the engine 2.

After step S4, the HCU 14 terminates the engine start control process. After the engine is started, the engine start control process is to be non-executed while the engine 2 is operated. But the engine 2 is driven to thereby cause the MG1 to generate an electric power, until the shortage of the suppliable electric power of the battery 3 for the MG2 is eliminated.

As such, the control device of the hybrid vehicle according to the embodiment is configured to start the engine 2 on the engine start determination condition depending on the travel direction of the hybrid vehicle 1, suitably determining an engine start in consideration of the travel direction to thereby avoid the engine 2 from being unnecessarily started.

Specifically, the control device according to the embodiment is to set the predetermined period of time TH (i.e., determination threshold) as different value, at a forward travel and a backward travel.

Thus, it is possible to suitably determine an engine start at a forward travel and a backward travel respectively, thereby avoiding the engine 2 from being unnecessarily started.

More specifically, the control device according to the embodiment is to set the predetermined period of time TH to be longer (namely, set the predetermined period of time TH as a larger value) at the backward travel than at the forward travel. In other words, at the backward travel, the engine is less-likely to be started than at the forward travel, with the same vehicle speed, request power, and battery SOC. This is because, at the backward travel, the hybrid vehicle 1 is expected to be parked to thereby stop the engine 2 in a relatively-short time.

Accordingly, it is possible to avoid the engine 2 from being started even immediately before a parking of the hybrid vehicle 1 where the engine 2 is expected to be stopped in a short time.

Additionally, the control device according to the embodiment is to set the predetermined period of time TH to be longer as the vehicle speed is lower. This is because, the hybrid vehicle 1 is more likely to be parked as the vehicle speed is lower.

Accordingly, it is possible to surely avoid the engine 2 from being started even immediately before a parking of the hybrid vehicle 1 where the engine 2 is expected to be stopped in a short time.

Note that as mentioned above, the HCU 14 is configured to select the different hold time map at forward travel and backward travel.

Alternatively, the HCU 14 may be configured to switch between a first mode where one of the hold time maps is selected in accordance with the travel direction of the hybrid vehicle 1, and a second mode where the forward-travel hold-time map is used regardless of the travel direction of the hybrid vehicle 1. In this case, the HCU 14 may be configured to switch therebetween, via a switch provided on the instrument panel of the hybrid vehicle 1, for example.

Although the embodiment(s) of the present invention has been disclosed, it is obvious that those skilled in the art can make changes without departing from the scope of the present invention. It is intended that all such modifications and equivalents are encompassed by the claims.

[Reference Signs List]

1: hybrid vehicle
2: engine
3: battery
4: first motor (generation motor)
6: second motor (traction motor)
9: driving wheel

40: control unit

**Claims**

1. A control device of a hybrid vehicle (1),

   the hybrid vehicle including:

      an engine (2);
      a generation motor (4) to rotate together with the engine (2) to thereby generate an electric power;
      a battery (3) to store the generated electric power by the generation motor (4); and
      a traction motor (6) to drive a driving wheel (9) with the generated electric power by the generation motor (4) and the stored electric power in the battery (3),

   the control device comprising:
   a control unit (40) to start the engine (2) following an engine start determination condition depending on a travel direction of the hybrid vehicle (1).

2. The control device as claimed in claim 1, wherein the control unit (40) is configured to:

      determine the engine start determination condition to be established to thereby start the engine (2), if a continuous period of time, for which a request power to be outputted from the traction motor (6) continues to satisfy a predetermined condition, exceeds a predetermined period of time (TH); and
      set the predetermined period of time (TH) as different value, at a forward travel and a backward travel of the hybrid vehicle (1).

3. The control device as claimed in claim 2, wherein at the backward travel, the control unit (40) sets the predetermined period of time (TH) as a larger value than at the forward travel.

4. The control device as claimed in claim 3, wherein the control unit (40) sets the predetermined period of time (TH) as a larger value, as a speed of the hybrid vehicle (1) is lower.

# FIG. 1

1

| 21 | SHIFT POSITION SENSOR |
|---|---|
| 22 | VEHICLE SPEED SENSOR |
| 23 | ROTATION SPEED SENSOR |
| 25 | BATTERY SENSOR |
| 26 | TEMPERATURE SENSOR |
| 27 | WATER TEMPERATURE SENSOR |

~14

HCU

~40

CONTROL UNIT

INJECTOR ~31

IGNITION PLUG ~32

BATTERY ~3

~10
A／C

~11
DC/DC CONVERTER

~12
LOW-VOLTAGE BATTERY

~13
DC/AC CONVERTER

9

2

4 ─ MG 1

6 ─ MG 2

9

~5
FIRST INVERTER

~7
SECOND INVERTER

BOOST CONVERTER ~8

8

# FIG. 2

```
                    ( START )
                        │
    ┌───────────────────┼──────────────────────────┐
    │                   ▼        ～ S1              │
    │    ╱ REQUEST POWER SATISFIES      ╲  NO       │
    │    ╲ PREDETERMINED CONDITION ?    ╱───────────┤
    │                   │ YES                       │
    │                   ▼        ～ S2              │
    │    ┌───────────────────────────────────┐      │
    │    │ SET PREDETERMINED PERIOD OF TIME TH│      │
    │    │ IN ACCORDANCE WITH TRAVEL DIRECTION│      │
    │    └───────────────────────────────────┘      │
    │                   │        ～ S3              │
    │  NO ╱ CONTINUOUS PERIOD   PREDETERMINED PERIOD ╲ ?│
    └─────╲    OF TIME      >        OF TIME TH     ╱   │
                          │ YES     ～ S4              │
                          ▼                            │
          ┌───────────────────────────────┐           │
          │         ENGINE START           │           │
          └───────────────────────────────┘           │
                          │◄───────────────────────────┘
                          ▼
                      ( RETURN )
```

9

## EUROPEAN SEARCH REPORT

**Application Number**

EP 25 19 8332

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/027461 A1 (HARADA TAKU [JP] ET AL) 26 January 2023 (2023-01-26) | 1-3 | INV.<br>B60K6/00 |
| A | * paragraphs [0112] - [0114]; figure 1 * | 4 | B60K6/46<br>B60W10/06 |
| X | FR 2 801 343 B1 (TOYOTA MOTOR CO LTD [JP]) 19 August 2005 (2005-08-19) | 1-3 | B60W10/08<br>B60W10/26 |
| A | * page 5, line 27 - page 12, line 2; figures 1, 2 *<br>* page 2, lines 17-37 * | 4 | B60W20/11<br>B60W20/13<br>B60W20/15<br>B60W20/40 |
| A | US 6 296 592 B1 (EGUCHI TAKAHIRO [JP] ET AL) 2 October 2001 (2001-10-02)<br>* column 26, lines 22-53 * | 1-4 | B60W30/18<br>B60W30/192 |
| A | US 2015/336571 A1 (KUWAHARA SEIJI [JP] ET AL) 26 November 2015 (2015-11-26)<br>* paragraphs [0024] - [0138]; figures 1, 4, 5 * | 1-4 | |

**TECHNICAL FIELDS SEARCHED (IPC)**

B60K
B60W

The present search report has been drawn up for all claims

| Place of search | Date of completion of the search | Examiner |
|---|---|---|
| Munich | 22 January 2026 | Vena, Gianpiero |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 8332

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2026

| Patent document cited in search report | | | Publication date | Patent family member(s) | | Publication date |
|---|---|---|---|---|---|---|
| US 2023027461 | A1 | | 26-01-2023 | CN | 115675433 A | 03-02-2023 |
| | | | | JP | 7666189 B2 | 22-04-2025 |
| | | | | JP | 2023017492 A | 07-02-2023 |
| | | | | US | 2023027461 A1 | 26-01-2023 |
| FR 2801343 | B1 | | 19-08-2005 | DE | 10057075 A1 | 31-05-2001 |
| | | | | FR | 2801343 A1 | 25-05-2001 |
| | | | | JP | 3715158 B2 | 09-11-2005 |
| | | | | JP | 2001140673 A | 22-05-2001 |
| | | | | US | 6494809 B1 | 17-12-2002 |
| US 6296592 | B1 | | 02-10-2001 | DE | 60025295 T2 | 13-07-2006 |
| | | | | EP | 1059215 A2 | 13-12-2000 |
| | | | | EP | 1616763 A2 | 18-01-2006 |
| | | | | JP | 3574997 B2 | 06-10-2004 |
| | | | | JP | 2000351361 A | 19-12-2000 |
| | | | | US | 6296592 B1 | 02-10-2001 |
| US 2015336571 | A1 | | 26-11-2015 | CN | 105082978 A | 25-11-2015 |
| | | | | EP | 2946979 A1 | 25-11-2015 |
| | | | | JP | 6348340 B2 | 27-06-2018 |
| | | | | JP | 2015217914 A | 07-12-2015 |
| | | | | US | 2015336571 A1 | 26-11-2015 |

EPO FORM P0459

For more details about this annex : see Official Journal of the European Patent Office, No. 12/82

**REFERENCES CITED IN THE DESCRIPTION**

**Patent documents cited in the description**

- JP 2011011714 A